# EUROPÄISCHE PATENTSCHRIFT

(11) **EP 1 924 455 B1**
(45) Veröffentlichungstag und Bekanntmachung des Hinweises auf die Patenterteilung: **11.01.2012**
(21) Anmeldenummer: 06792924.0
(22) Anmeldetag: 22.08.2006
(51) Int. Cl.: B60K 6/00

(54) **MOMENTENÜBERWACHUNG FÜR EINEN HYBRIDANTRIEB**
TORQUE MONITORING FOR A HYBRID DRIVE
SURVEILLANCE DE COUPLE POUR UN ENTRAINEMENT HYBRIDE

(30) Priorität: 02.09.2005 DE 102005041663
(43) Veröffentlichungstag der Anmeldung: 28.05.2008
(73) Patentinhaber: Robert Bosch GmbH, 70442 Stuttgart (DE)
(72) Erfinder: VON SCHWERTFUEHRER, Gerit, 74321 Bietigheim-Bissingen (DE); WUENSCH, Volkmar, 08058 Zwickau (DE); NIEMANN, Holger, 71634 Ludwigsburg (DE); HAGMAN, Per, 70469 Stuttgart (DE)
(86) Internationale Anmeldenummer: PCT/EP2006/065534
(87) Internationale Veröffentlichungsnummer: WO 2007/025904

(56) Entgegenhaltungen:
- EP-A2- 1 219 486
- WO-A-97/18101
- WO-A-2006/069833

## Beschreibung

### Stand der Technik

Die Erfindung betrifft ein Verfahren zur Momentenüberwachung bei einem Hybridantrieb aus einer Brennkraftmaschine mit einem zugehörigen Motorsteuergerät und einem eigensicheren Elektroantrieb mit einem zugehörigen Steuergerät, wobei eine abgesicherte Kommunikation stattfindet, bei der das Motorsteuergerät ein Soll-Moment an das Steuergerät des eigensicheren Elektroantriebes abgibt und ein Statussignal von ihm empfängt und wobei das Motorsteuergerät ein Fehlersignal bei Überscheitung eines zulässigen Moments oder bei einem negativen Statussignal abgibt.

Derartige Momentenüberwachungen werden eingesetzt, um eine mögliche Fehlfunktion eines Steuergeräts für einen Fahrzeugantrieb oder des Antriebs selber zum Schutz von Fahrzeuginsassen als auch des externen Verkehrs festzustellen. Zur Momentenüberwachung wird im Betrieb kontinuierlich aus einem Fahrzeugführerwunsch ein zulässiges Moment ermittelt und mit einem Ist-Moment des Antriebs verglichen. Bei einem Hybridantrieb aus einer Brennkraftmaschine und einem Elektroantrieb wird das Ist-Moment aus der Summe der Ist-Momente der Brennkraftmaschine und des Elektroantriebs ermittelt. Hierzu werden Daten zwischen einem Motorsteuergerät für die Brennkraftmaschine und einer Steuerung für den Elektroantrieb ausgetauscht.

Aus der WO 2006/069833 ist ein Verfahren zum Betreiben eines Hvbridfahrzeugantriebs bekannt, bei dem ein Drehmoment eines Verbrennungsmotors und ein Drehmoment wenigstens einer Elektromaschine zu einem gemeinsamen Drehmoment des Hybridfahrzeugantriebs überlagert werden, wobei die Antriebsaggregate geregelt werden.

Es ist Aufgabe der Erfindung, ein Verfahren bereitzustellen, das eine Vereinfachung der Kommunikation zwischen den Steuerungen für die Brennkraftmaschine und den Elektroantrieb ermöglicht.

### Vorteile der Erfindung

Die Aufgabe wird nach Anspruch 1 dadurch gelöst, dass die Eigensicherheit des Elektroantriebs für die ständige Momentenüberwachung nach den Vorgaben des Soll-Moments innerhalb des Steuergerätes benutzt wird. Hierdurch kann der Kommunikationsaufwand reduziert werden. Da die Kommunikation aus Sicherheitsgründen als abgesicherte Kommunikation ausgeführt sein muss, reduziert sich hierdurch auch der Aufwand für die Überwachung der Kommunikation zwischen dem hier als Antriebsstrangkoordinator fungierenden Motorsteuergerät der Brennkraftmaschine und dem Steuergerät für den Elektroantrieb. Wird nur das Soll-Moment des eigensicheren Elektroantriebs vom Motorsteuergerät an das Steuergerät weitergegeben, wobei das im Steuergerät vorhandene Ist-Moment zur Momentenüberwachung benutzt wird und nur ein Statussignal, das eine korrekte Funktion der Kommunikation und des eigensicheren Elektroantriebes anzeigt, an das Motorsteuergerät weitergegeben und wird ein Fehlersignal bei Überschreitung eines zulässigen Moments oder bei einem negativen Statussignal abgegeben, wird erreicht, dass die Momentenüberwachung sicher ist, obwohl das Ist-Moment des Elektroantriebs nicht an den Antriebsstrangkoordinator gemeldet wird. Der verringerte Kommunikationsaufwand vereinfacht das Gesamtsystem.

In einer bevorzugten Ausführung des Verfahrens wird das zulässige Moment des Antriebes mit der Summe aus einem Ist-Moment der Brennkraftmaschine und dem Soll-Moment des eigensicheren Elektroantriebes verglichen und es wird ein Fehlersignal abgegeben, falls die gebildete Summe das zulässige Moment überschreitet. Hierdurch kann erreicht werden, dass eine zuverlässige Momentüberwachung erfolgen kann, obwohl das Ist-Moment des Elektroantriebs nicht an den Antriebsstrangkoordinator gemeldet wird.

In einer Weiterbildung des Verfahrens sendet das Motorsteuergerät ein intern plausibilisiertes Soll-Moment an den eigensicheren Elektroantrieb und das Steuergerät gibt ein positives Statussignal ab, wenn das Ist-Moment das Soll-Moment erreicht und gibt ein negatives Statussignal ab, wenn das Ist-Moment das Soll-Moment nicht erreicht. In dieser Ausführung müssen gegenüber einer eigensicheren Ausführung des Elektroantriebs keine zusätzlichen Signale erzeugt oder abgeleitet werden und das System kann vorteilhaft möglichst einfach gestaltet werden, wobei trotzdem die erforderliche Sicherheit erreicht werden kann.

### Zeichnung

Die Erfindung wird im Folgenden anhand der in den Figuren dargestellten Ausführungsbeispiele näher erläutert. Es zeigen:
Figur 1 schematisch eine kontinuierliche Momentenüberwachung für eine Brennkraftmaschine nach dem Stand der Technik
Figur 2 den Signalfluss zwischen Motorsteuergerät und Steuergerät des Elektromotors in der erfindungsgemäßen Ausführung.

### Beschreibung der Ausführungsbeispiele

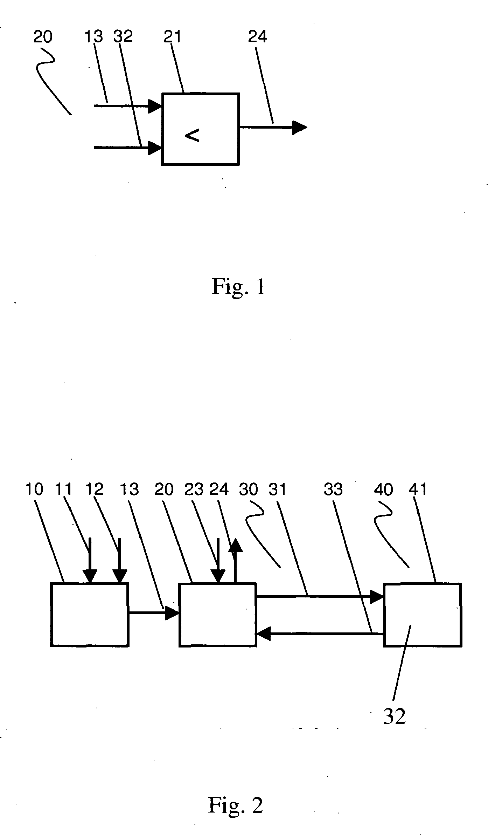

Figur 1 zeigt eine Momentenüberwachung für eine Brennkraftmaschine mit einem zugehörigen Motorsteuergerät 20. Zur Aufdeckung von Fehlfunktionen der Steuerung ist die Ermittlung eines zulässigen Moments 13 vorgesehen, das in einer Vergleichsstufe 21 mit einem Ist-Moment 32 verglichen wird. Wird festgestellt, dass das Ist-Moment 32 höher als das zulässige Moment 13, wird auf eine Fehlfunktion geschlossen und ein Fehlersignal 24 abgegeben.

Die Figur 2 zeigt eine Momentenüberwachung mit der erfindungsgemäß vereinfachten Kommunikation 30 zwischen dem Motorsteuergerät 20 der Brennkraftmaschine und dem Steuergerät 41 des eigensichern Elektroantriebs 40. Wie beim Stand der Technik wird das zulässige Moment 13 bestimmt. Ebenso wird aus dem Fahrerwunsch ein Soll-Moment 31 für den Elektroantrieb 40 abgeleitet. Da dieser Elektroantrieb 40 eigensicher ausgelegt ist, kann über das Statussignal 33 dem Motorsteuergerät 20 gemeldet werden, ob das angeforderte Soll-Moment 31 gestellt werden kann. Zur Erreichung der Eigensicherheit des Elektroantriebs 40 muss im Steuergerät 41 das Ist-Moment 32 vorliegen. Daher kann das Soll-Moment 31 innerhalb des Steuergeräts 41 mit dem dort erhobenen Ist-Moment 32 verglichen werden. Kann das Soll-Moment 31 nicht gestellt werden, kann über das Statussignal 33 eine entsprechende Meldung übermittelt werden. Im Motorsteuergerät 20 kann das zulässige Moment 13 mit der Summe aus dem Ist-Moment der Brennkraftmaschine und dem Soll-Moment 31 des Elektroantriebs 40 verglichen werden und bei einer Überschreitung das Fehlersignal 24 abgegeben werden. Das Ist-Moment der Brennkraftmaschine kann dabei aus Messwerten 23 abgeleitet werden, wobei bei einem Otto-Motor beispielsweise die Luftmenge, der Zündwinkel und/oder das Ausgangssignal der Lambdasonde oder aus diesen abgeleitete Signale benutzt werden können. Bei einem Dieselmotor können Einspritzparameter wie Kraftstoffdruck, Ventilöffnungs- und Schließzeit oder daraus abgeleitete Werte als Messwerte 23 benutzt werden.

Die Übermittlung des Ist-Moments 32 des Elektroantriebs 40 sowie dessen Verarbeitung im Motorsteuergerät 20 können entfallen. Hierdurch kann der Bedarf an Kommunikation zwischen dem Motorsteuergerät 20 und dem Steuergerät 40 vermindert werden.

## Patentansprüche

1. Verfahren zur Momentenüberwachung bei einem Hybridantrieb aus einer Brennkraftmaschine mit einem zugehörigen Motorsteuergerät (20) und einem eigensicheren Elektroantrieb (40) mit einem zugehörigen Steuergerät (41), wobei eine abgesicherte Kommunikation (30) stattfindet, bei der das Motorsteuergerät (20) ein Soll-Moment (31) an das Steuergerät (41) des eigensicheren Elektroantriebes (40) abgibt und ein Statussignal (33) von ihm empfängt und wobei das Motorsteuergerät (20) ein Fehlersignal (24) bei Überschreitung eines zulässigen Moments (13) oder bei einem negativen Statussignal (33) abgibt, wobei die Eigensicherheit des Elektroantriebs (40) für die ständige Momentenüberwachung nach den Vorgaben des Soll-Moments (31) innerhalb des Steuergerätes (41) benutzt wird **dadurch gekennzeichnet, dass** nur das Soll-Moment (31) des eigensicheren Elektroantriebs (40) vom Motorsteuergerät (20) an das Steuergerät (41) weitergegeben wird, wobei das im Steuergerät (41) vorhandene Ist-Moment (32) zur Momentenüberwachung benutzt wird und nur ein Statussignal (33), das eine korrekte Funktion der Kommunikation (30) und des eigensicheren Elektroantriebes (40) anzeigt, an das Motorsteuergerät (20) weitergegeben wird und wobei ein Fehlersignal (24) bei Überschreitung eines zulässigen Moments (13) oder bei einem negativen Statussignal (33) abgegeben wird.

2. Verfahren nach Anspruch 1, **dadurch gekennzeichnet, dass** das zulässige Moment (13) des Antriebes mit der Summe aus einem Ist-Moment der Brennkraftmaschine und dem Soll-Moment (31) des eigensicheren Elektroantriebes (40) verglichen wird und dass ein Fehlersignal (24) abgegeben wird, falls die gebildete Summe das zulässige Moment (13) überschreitet.

3. Verfahren nach einem der Ansprüche 1 bis 2 3, **dadurch gekennzeichnet, dass** das Motorsteuergerät (20) ein intern plausibilisiertes Soll-Moment (31) an den eigensicheren Elektroantrieb (40) sendet und dass das Steuergerät (41) ein positives Statussignal (33) abgibt, wenn das Ist-Moment (32) das Soll-Moment (31) erreicht und ein negatives Statussignal (33) abgibt, wenn das Ist-Moment (32) das Soll-Moment (31) nicht erreicht.

## Claims

1. Method for monitoring torque in a hybrid vehicle comprising an internal combustion engine, which has an associated engine controller (20), and an intrinsically safe electric drive (40), which has an associated controller (41), with a secured communication operation (30) taking place, the engine controller (20) outputting a setpoint torque (31) to the controller (41) of the intrinsically safe electric drive (40) and receiving a status signal (33) from the said controller (41) during the said communication operation, and with the engine controller (20) outputting a fault signal (24) when a permissible torque (13) is exceeded or in the case of a negative status signal (33), with the intrinsic safety of the electric drive (40) being used for continuously monitoring the torque in accordance with the prespecified values for the setpoint torque (31) within the controller (41), **characterized in that** only the setpoint torque (31) of the intrinsically safe electric drive (40) is passed from the engine controller (20) to the controller (41), with the actual torque (32) which is present in the controller (41) being used to monitor the torque and only one status signal (33), which indicates correct functioning of the communication operation (30) and the intrinsically safe electric drive (40), being passed to the engine controller (20), and with a fault signal (24) being output when a permissible torque (13) is exceeded or in the case of a negative status signal (33).

2. Method according to Claim 1, **characterized in that** the permissible torque (13) of the drive is compared with the sum of an actual torque of the internal combustion engine and the setpoint torque (31) of the intrinsically safe electric drive (40), and **in that** a fault signal (24) is output if the calculated sum exceeds the permissible torque (13).

3. Method according to either of Claims 1 and 2, **characterized in that** the engine controller (20) sends an internally plausibility-checked setpoint torque (31) to the intrinsically safe electric drive (40), and **in that** the controller (41) outputs a positive status signal (33) when the actual torque (32) reaches the setpoint torque (31) and outputs a negative status signal (33) when the actual torque (32) does not reach the setpoint torque (31).

## Revendications

1. Procédé de surveillance de couple pour un entraînement hybride intégré dans un moteur à combustion interne équipé d'un élément de commande de moteur (20) associé et d'un entraînement électrique (40) à sécurité intrinsèque avec appareil de commande (41) associé, une communication (30) sécurisée se produisant dans laquelle l'élément de commande de moteur (20) envoie un couple théorique (31) à l'appareil de commande (41) de l'entraînement électrique (40) à sécurité intrinsèque et reçoit de lui un signal d'état (33), l'élément de commande de moteur (20) envoyant un signal d'erreur (24) en cas de dépassement d'un couple (13) admis ou de signal d'état (33) négatif, la sécurité intrinsèque de l'entraînement électrique (40) étant utilisée pour surveiller en permanence le couple en fonction des directives de couple théorique (31) données à l'intérieur de l'appareil de commande (41), **caractérisé en ce que** seul le couple théorique (31) de l'entraînement électrique (40) à sécurité intrinsèque est transmis de l'élément de commande de moteur (20) à l'appareil de commande (41), le couple réel (32) observé dans l'appareil de commande (41) étant utilisé pour la surveillance de couple et seul un signal d'état (33) affichant une fonction correcte de la communication (30) et de l'entraînement électrique (40) à sécurité intrinsèque étant transmis à l'élément de commande de moteur (20), un signal d'erreur (24) étant envoyé en cas de dépassement du couple (13) admis ou de signal d'état (33) négatif.

2. Procédé selon la revendication 1, **caractérisé en ce que** le couple admis (13) de l'entraînement est comparé à la somme d'un couple réel du moteur à combustion interne et du couple théorique (31) de l'entraînement électrique (40) à sécurité intrinsèque et qu'un signal d'erreur (24) est envoyé lorsque la somme calculée dépasse le couple admis (13).

3. Procédé selon l'une quelconque des revendications 1 à 2, **caractérisé en ce que** l'élément de commande de moteur (20) envoie à l'entraînement électrique (40) à sécurité intrinsèque un couple théorique (31) rendu plausible en interne et que l'appareil de commande (41) émet un signal d'état (33) positif lorsque le couple réel (32) atteint le couple théorique (31) et un signal d'état (33) négatif lorsque le couple réel (32) n'atteint pas le couple théorique (31).
